# EUROPEAN PATENT APPLICATION

(11) **EP 2 521 017 A1**
(43) Date of publication of application: **07.11.2012**
(21) Application number: 10852012.3
(22) Date of filing: 16.09.2010
(51) Int. Cl.: G06F 3/048

(54) **METHOD AND DEVICE FOR REALIZING LOCK SCREEN**

(30) Priority: 27.05.2010 CN 201010187354
(71) Applicant: ZTE Corporation, Shenzhen, Guangdong 518057 (CN)
(72) Inventor: HUANG, Qinbo, Shenzhen Guangdong 518057 (CN)
(74) Representative: Wihlsson, Joakim Per Magnus
(86) International application number: PCT/CN2010/076985
(87) International publication number: WO 2011/147143

(57) **Abstract**

The disclosure provides a method and a device for implementing screen locking. In the method, a pre-selected picture is selected; when a screen locking condition is met, the pre-selected picture is taken as a screen locking picture, function restriction processing is performed on the screen locking picture to obtain the screen locking interface and the screen is locked. According to the method, the pre-selected picture can be taken as the screen locking interface. Compared with the prior art, the screen locking function is enhanced.

## Description

### TECHNICAL FIELD

The disclosure relates to the communications, and in particular to a method and a device for implementing screen locking.

### BACKGROUND

With the continuous development of the communications, handheld mobile devices have become increasingly popular and diverse. For a handheld mobile device with a human-machine interface, its usability and friendliness have drawn particular concern of the general users.

At present, many handheld mobile devices in the market are provided with a screen locking function. There are various screen locking interfaces and unlocking approaches. However, these screen locking approaches are preset and thus lack flexibility. That is, a user cannot take the initiative and arrange the desired information on the screen locking interface; thus, the user cannot see the desired information on the screen locking interface without performing an unlocking operation.

### SUMMARY

In the prior art, it is impossible to customize a screen locking interface directly and to arrange the desired information on the screen locking interface so that a user can see the customized screen locking interface without an unlocking operation. To solve the above problem, the embodiment of the disclosure provide a method for implementing screen locking, which includes acquiring a pre-selected picture, taking the pre-selected picture as a screen locking picture, when a screen locking condition is met, performing function restriction processing on the screen locking picture to obtain a screen locking interface, and locking the screen.

Said acquiring the pre-selected picture includes acquiring a single pre-selected picture, and said taking the pre-selected picture as the screen locking picture includes taking the single pre-selected picture as the screen locking picture.

Said acquiring the pre-selected picture includes acquiring multiple pre-selected pictures, and said taking the pre-selected picture as the screen locking picture includes taking turns picking up one of the multiple pre-selected pictures as the screen locking picture, or selecting one of the multiple pre-selected pictures as the screen locking picture.

Said taking the multiple pre-selected pictures as the screen locking picture in turn includes taking turns picking up one of the multiple pre-selected pictures as the screen locking picture at a rotation time interval, wherein the rotation time interval is a time interval preset by a user or a default time interval.

The method further includes, before said acquiring the pre-selected picture, capturing a screenshot of the interface currently shown on the screen and taking a picture generated by the screenshot capturing as the pre-selected picture.

A device for implementing screen locking includes an acquisition module configured to acquire a pre-selected picture, a screen locking module configured to take the pre-selected picture as a screen locking picture when a screen locking condition is met, to perform function restriction processing on the screen locking picture so as to obtain a screen locking interface, and to lock the screen.

The acquisition module is specifically configured to acquire a single pre-selected picture; and the screen locking module takes the single pre-selected picture as the screen locking picture.

The acquisition module is specifically configured to acquire multiple pre-selected pictures; and the screen locking module takes turns picking up one of the multiple pre-selected pictures as the screen locking picture or selects one of the multiple pre-selected pictures as the screen locking picture.

When the screen locking module takes turns picking up one of the multiple pre-selected pictures as the screen locking picture, the screen locking module is specifically configured to take turns picking up one of the multiple pre-selected pictures as the screen locking picture at a rotation time interval, wherein the rotation time interval is a time interval preset by a user or a default time interval.

The device further includes a screenshot capturing module configured to capture a screenshot of the interface currently shown on the screen and to take a picture generated by the screenshot capturing as the pre-selected picture.

As can be seen from the specific embodiments provided by the disclosure, by taking a pre-selected picture as the screen locking picture and performing function restriction processing on the screen locking picture to obtain the screen locking interface and locking the screen, the pre-selected picture can be taken as the screen locking interface and the function is enhanced compared with the prior art.

### BRIEF DESCRIPTION OF THE DRAWINGS

Fig. 1 shows a flowchart for setting up the screen locking interface according to a first embodiment of the disclosure;
Fig. 2 shows a flowchart of a method for implementing screen locking according to the first embodiment of the disclosure;
Fig. 3 shows a block diagram of a device according to a second embodiment of the disclosure.

### DETAILED DESCRIPTION

The specific implementation of the method and device for implementing screen locking are illustrated below via embodiments thereof with reference to the drawings.

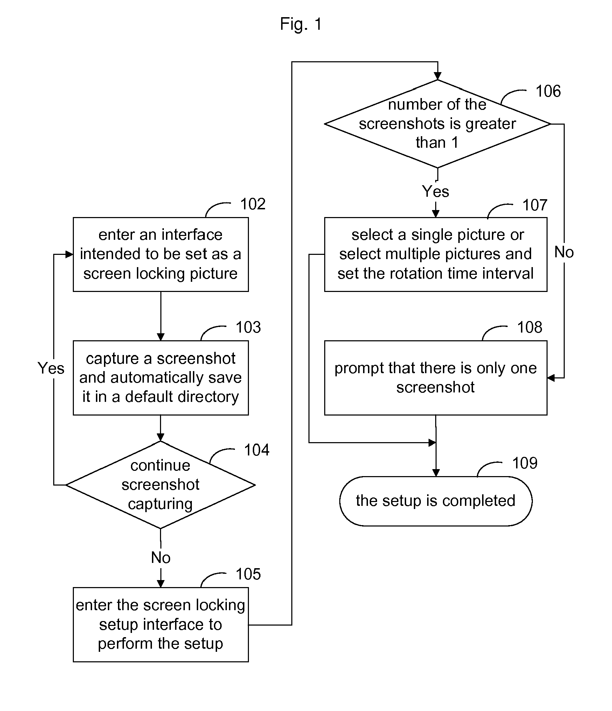

The first embodiment provided by the disclosure is a method for implementing screen locking, wherein the process of setting up the screen locking interface is shown in Fig. 1. The method includes the following steps:
Step 102: an interface intended to be set as a screen locking picture is entered.
Step 103: a screenshot of the picture of the interface is captured and automatically saved in a default directory.

In specific implementation of Step 103, the screenshot of the picture of the interface may be captured by pressing a magic key ("magic key screenshot capturing" for short) and automatically saved in a default directory, wherein the magic key screenshot capture means, for example, capturing a screenshot of the current interface of the handheld device via a volume up key plus a hang up key to generate a picture, which may be a function provided by the system in advance.

Step 104: a selection is performed between continuing capturing and stopping capturing, if continuing, the process returns to Step 102 to continue screenshot capturing, otherwise, the process goes to Step 105.

Step 105: the screen locking interface is entered for setup.

Step 106: if there is only one screenshot in the default directory, the process goes to Step 108, otherwise, the process goes to Step 107.

Step 107: a single screenshot or multiple screenshots are selected from the screenshots in the default directory, and if multiple screenshots are selected, the multiple screenshots may take turns acting as the screen locking interface at a set rotation time interval, or at a default time interval without any setting, and then the process goes to Step 109, wherein the default time interval may be preset as 2 minutes, for example.

Step 108: it is prompted that there is only one screenshot, and no more setup is needed.

Step 109: setup of the screen locking interface is completed.

Of course, some changes may be made to the process shown in Fig. 1 to a proper extent.

For example, after the screenshot capturing is performed for once, the process may skip Step 104 of determining whether to continue screenshot capturing, and go straight to Step 105 and the following steps or to Step 108. It is determined whether to continue screenshot capturing after Step 109 is performed. It is only a preferred solution of the embodiment for obtaining the pre-selected picture that the screenshot of the interface currently shown on the screen is captured and the picture is generated using the screenshot. Additionally, the pre-selected picture may be obtained via network downloading or from pictures taken by a cell phone terminal with a camera function.

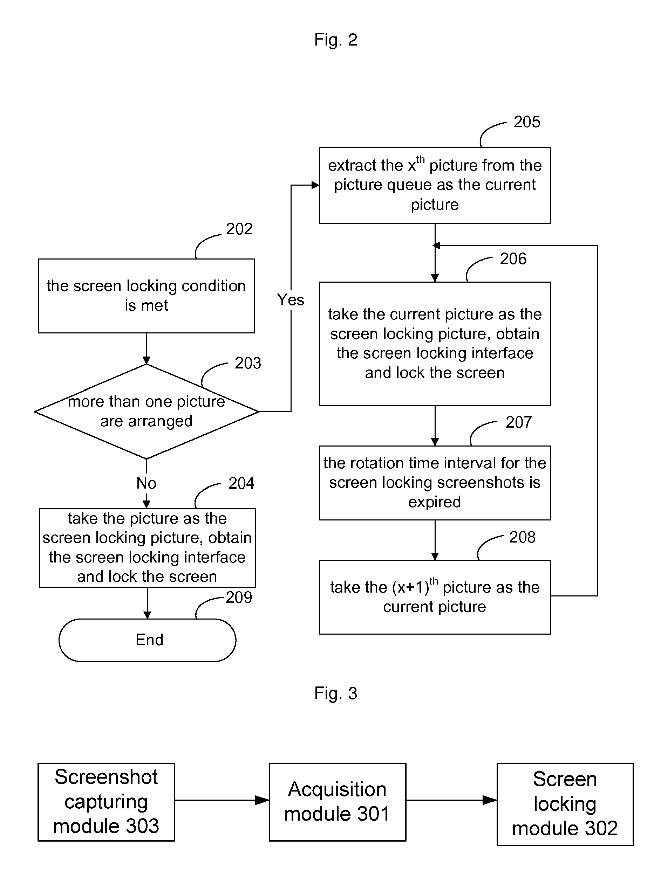

As shown in Fig. 2, after the screenshot capturing setup is performed, based on parameters obtained from the screen locking setup, screen locking may be performed, which comprises the following steps:
Step 202: it is determined that the screen locking condition is met.

The fulfilling of the screen locking condition may be associated with active screen locking by pressing keys, or automatic screen locking when the idle time period is expired.

Step 203: it is determined whether one or more pictures are arranged, if yes, the process goes to Step 205, otherwise the process goes to Step 204.

The embodiment is illustrated with the example of the picture generated by screenshot capturing being used as the pre-selected picture; if the screenshot capturing is performed for only once in the process of setting up the screen locking interface, then the process just goes to the following Step 204 and takes the single picture generated by the screen capturing (i.e., the single pre-selected picture) as the screen locking picture; if the screenshot capturing is performed for more than one times (i.e., multiple pictures are pre-selected and a picture queue is generated), then the process goes to the following Step 205.

Step 204: the single pre-selected picture is taken as the screen locking picture, function restriction processing is performed on the screen locking picture to obtain the screen locking interface and then the screen is locked. After that, the process goes to Step 209.

In this step, the function restriction processing includes but is not limited to: restricting dialing, shutdown, and volume adjustment, restricting entering and operation of specific applications, and usage of various shortcut functions and so on;

For example, only usage of emergency dialing is allowed.

Step 205: the x^{th} (the x has an initial value of 1) picture is selected from the picture queue to be the current picture.

The picture queue includes the multiple pre-selected pictures.

Step 206: the current picture is taken as the screen locking picture, function restriction processing is performed on the screen locking picture to obtain the screen locking interface, and the screen is locked.

Step 207: when the rotation time interval for the screen locking picture is expired, the process goes to Step 208.

Step 208: the picture next to the x^{th} picture, i.e., the (x+1)^{th} picture, is set to be the current picture, and if the value of (x+1) is greater than the total number of pictures in the picture queue, the first picture is cyclically turned to, that is, x is set to 1; then the process goes to Step 206 to continue the cycle until the device is unlocked and the process ends.

Additionally, it should be noted that one of the multiple pre-selected pictures may be selected as the screen locking picture.

Step 209: the process of entering a screen locked mode ends, so that the handheld device is no longer open to the user and the terminal is unavailable.

The second embodiment provided by the disclosure is a device for implementing screen locking as shown in Fig. 3, which includes:
an acquisition module 301, configured to acquire a pre-selected picture;
a screen locking module 302, configured to take the pre-selected picture as a screen locking picture when a screen locking condition is met, to perform function restriction processing on the screen locking picture so as to obtain a screen locking interface, and to lock the screen.

Further, the acquisition module 301 is specifically configured to acquire a single pre-selected picture; and the screen locking module 302 is specifically configured to take the pre-selected picture as a screen locking picture when a screen locking condition is met, to perform function restriction processing on the screen locking picture so as to obtain a screen locking interface, and to lock the screen.

Further, the acquisition module 301 is specifically configured to acquire multiple pre-selected pictures; and the screen locking module 302 is specifically configured, when a screen locking condition is met, to take turns picking up one of the multiple pre-selected pictures as the screen locking picture or select one of the multiple pre-selected pictures as the screen locking picture, to perform function restriction processing on the screen locking picture so as to obtain a screen locking interface, and to lock the screen.

Furthermore, the screen locking module 302 is further configured to take turns picking up one of the multiple pre-selected pictures as the screen locking picture at a rotation time interval, wherein the rotation time interval is a time interval preset by a user or a default time interval.

The device according to the disclosure further includes a screenshot capturing module 303, configured to capture a screenshot of the interface currently shown on the screen and to take a picture generated by the screenshot capturing as the pre-selected picture.

Obviously, those skilled in the art can make various changes and modifications to the disclosure without departing from the spirit and scope of the disclosure. Therefore, if the changes and modifications of the disclosure fall within the scope of the claims of the disclosure and equivalents thereof, then these changes and modifications are intended to be included in the disclosure.

## Claims

1. A method for implementing screen locking, comprising:
acquiring a pre-selected picture;
taking the pre-selected picture as a screen locking picture, when a screen locking condition is met;
performing function restriction processing on the screen locking picture to obtain a screen locking interface; and
locking the screen.

2. The method according to claim 1,
wherein said acquiring the pre-selected picture comprises: acquiring a single pre-selected picture; and
wherein said taking the pre-selected picture as the screen locking picture comprises: taking the single pre-selected picture as the screen locking picture.

3. The method according to claim 1,
wherein said acquiring the pre-selected picture comprises: acquiring multiple pre-selected pictures; and
wherein said taking the pre-selected picture as the screen locking picture comprises: taking turns picking up one of the multiple pre-selected pictures as the screen locking picture, or selecting one of the multiple pre-selected pictures as the screen locking picture.

4. The method according to claim 3,
wherein said taking turns picking up one of the multiple pre-selected pictures as the screen locking picture comprises: taking turns picking up one of the multiple pre-selected pictures as the screen locking picture at a rotation time interval;
wherein the rotation time interval is a time interval preset by a user or a default time interval.

5. The method according to claim 1, further comprising:
before said acquiring the pre-selected picture, capturing a screenshot of the interface currently shown on the screen and taking a picture generated by the screenshot capturing as the pre-selected picture.

6. A device for implementing screen locking, comprising:
an acquisition module, configured to acquire a pre-selected picture; and
a screen locking module, configured to take the pre-selected picture as a screen locking picture when a screen locking condition is met, to perform function restriction processing on the screen locking picture so as to obtain a screen locking interface, and to lock the screen.

7. The device according to claim 6,
wherein the acquisition module is specifically configured to acquire a single pre-selected picture; and
wherein the screen locking module takes the single pre-selected picture as the screen locking picture.

8. The device according to claim 6,
wherein the acquisition module is specifically configured to acquire multiple pre-selected pictures; and
wherein the screen locking module takes turns picking up one of the multiple pre-selected pictures as the screen locking picture, or selects one of the multiple pre-selected pictures as the screen locking picture.

9. The device according to claim 8, wherein when the screen locking module takes turns picking up one of the multiple pre-selected pictures as the screen locking picture, the screen locking module is specifically configured to take turns picking up one of the multiple pre-selected pictures as the screen locking picture at a rotation time interval,
wherein the rotation time interval is a time interval preset by a user or a default time interval.

10. The device according to claim 6, further comprising:
a screenshot capturing module, configured to capture a screenshot of the interface currently shown on the screen and to take a picture generated by the screenshot capturing as the pre-selected picture.
